# EUROPEAN PATENT SPECIFICATION

(11) **EP 2 307 531 B1**
(45) Date of publication and mention of the grant of the patent: **15.02.2012**
(21) Application number: 09802464.9
(22) Date of filing: 17.02.2009
(51) Int. Cl.: C10L 5/44, C10L 5/46

(54) **GRINDABLE PELLET**
KAUBARE PILLE
PASTILLE APTE À ÊTRE BROYÉE

(30) Priority: 01.08.2008 EP 08013814
(43) Date of publication of application: 13.04.2011
(73) Proprietor: DSM IP Assets B.V., 6411 TE Heerlen (NL)
(72) Inventor: NAFID, Mohammed, 6160 MA Geleen (NL); KOEKKOEK, Ralph, 1078 LK Amsterdam (NL); VAN MANEN, Ernst-Jan, 6213 CT Maastricht (NL)
(74) Representative: Bootsma, Jan P.C.
(86) International application number: PCT/EP2009/051858
(87) International publication number: WO 2010/012510

(56) References cited:
- EP-A- 1 428 642
- WO-A-97/05218
- GB-A- 1 364 474
- US-A- 4 529 407
- US-B1- 6 635 093

## Description

This invention relates to the preparation of a pellet derived from domestic and industrial waste that contains plastic and cellulose particles. In particular, the invention relates to a pellet with good grindability and the process of making thereof.

In response to environmental, economic and associated regulatory and legislative drivers, there has been an increased trend towards recycling of domestic and industrial waste. Life cycle analyses of recycling processes indicate that decontamination and sorting of individual waste component streams is often not viable in economic and environmental terms. Therefore, there is an increasing emphasis upon the utilization of industrial and domestic waste as a fuel source for power generation or other industrial applications.

US 6,635,093 addresses this problem by producing a fuel pellet by forcing a cellulose and plastic waste stream through pelletizing die holes with a length to diameter ratio of at least 5, such that the frictional heat melted the outer portion of the pellet. The resultant pellet was sufficiently hard to be directly fed into a furnace or, if required, effectively ground with a particle size distribution having at least 80 wt. % of the pellet ground to less than 2mm. While the pellets of this invention exhibited improved grinding properties compared to conventional pellets, further improvements to the grindability of a fuel source is still required.

It is an object of the present invention to produce a pellet with good grindability from an energy efficient process.

In one embodiment of the present invention, there is provided a method for producing a pellet suitable for grinding into a fine powder comprising the steps of:
(a) forming a waste feed stream comprising:
   (i) a polymer component A comprising, relative to the total weight of the waste stream, at least 25 wt.% of a plastic film component B having a cross sectional area (A) to length (L) ratio of less than 0.2 and
   (ii) a cellulose component C of at least 20 wt.%, relative to the total weight of the waste stream,
(b) pelletizing the waste stream with a pelletizing device such that at least part of the plastic film component B, is converted to component D, having a A/L ratio of at least 0.2, by chemical and/or heat treatment,

wherein, the pellet has less than 15 wt.% component B relative to the total weight of the pellet and in which component D, if heat treated, is derived from plastic film component B which has been no more than partially melted.

It has unexpectedly been found that through controlling or selecting the composition of a feed stream and converting the properties of the feed stream through pelletizing, as defined in the present invention, pellets of good grindability may be produced in an energy efficient manner.

Improved grindability may be achieved by eliminating or reducing the more elastic (or less rigid) components of the waste feed stream during the pelletizing process. The stiffness of the plastic film component B is proportional to the elastic modulus Eₘ and the ratio of the cross sectional area of plastic film to the plastic film's length (A/L). The increase in component's B stiffness and hence its conversion to component D may be achieved through increasing the A/L ratio. Typically, the length of the film cannot be efficiently reduced with conventional grinding devices. This is due to the elasticity of the film, which causes attempts to sever the film to result in some elongation of a portion of the film, thereby increasing a portion of the film's length. However, the A/L ratio of the film containing component may be increased via chemically binding film together or via heat treatment. Examples of suitable binding agents include natural and synthetic glues and resins. Preferably, a proportion of the feed stream comprises a waste component sufficiently rich in a natural glue or resin, such that the binding agent is comprised within the feed stream.

Preferably, the pellet has less than 15 wt.% component B, more preferably less than 10 wt.% component B, even more preferably less than 8 wt.% component B, even more preferably less than 6 wt.% component B and most preferably less than 4 wt.%. The lower the wt.% of component B the better grindability of the pellet.

Controlling the proportion of component B above a minimum level enables grinding performance to be maintained while reducing energy input by avoiding the additional energy to reduce component B to levels which do not impact upon the performance of the downstream grinding operation. Accordingly, in some embodiments, the component is preferably at least 1 wt.% or even 2 wt.%.

It has been found that plastic film with an A/L ratio of less than 0.2 are particularly difficult to grind into a fine powder with a particle size distribution, such that 90 wt.% of the particles, more preferably 95 wt.% and even more preferably 97 wt%, are less than 2 mm in diameter. By reducing the proportion of particles above 2 mm, the powder has good transportability and combustion properties.

Preferably, the A/L ratio of the plastic film component B is less than 0.18, more preferably less than 0.15, even more preferably less than 0.12 and most preferably less than 0.10. In general, lower the A/L ratio, the lower the rigidity and grindability of the plastic film. Therefore, grinding performance is enhanced by converting these components to a more grindable form.

The A/L ratio is determined by measuring the longest longitudinal dimension of the plastic film (L), the longest latitudinal dimension (W) and the thickness (D), with the cross sectional area A of a particle of component B defined as W x D. The typical thickness of the plastic film mirrors that of waste packaging material that typically constitutes a large proportion of waste material. The typical thickness of waste plastic is in the range of 10 to 100 µm and more generally in the range of 20 to 50 µm. However, laminated plastics may have a depth of up to 200 or 300 µm. An example of the dimensions making up a plastic film with an A/L ratio of 0.2 is W=20 mm D=250 µm (A=5 mm²) and L=25 mm.

### DEFINITION OF COMPONENTS

Generally, the waste stream comprises cellulose (component C) and plastic materials (component A) which constitute a total of at least 70 wt.% of the mixture, preferably at least 75 wt.% of the mixture, more preferably at least 80 wt.%, even more preferably at least 85 wt.%, and most preferably at least 90 wt.%, each based on total solid components. Typically, the cellulose/plastic mixture originates from waste material such as domestic waste (including municipal and urban waste) and/or industrial waste. The cellulosic material may originate from, for example, paper, cardboard, beverage cartons, wood, diapers, bandages, and textiles such as cotton, viscose and rayon. The thermoplastic material may originate from, for example, packing material such as polymeric sheet or film material. In principle, all types of thermoplastic polymers can be present in the waste mixture.

The polymer component A represents at least 25 wt.%, and preferably at least 30 wt.%, more preferably at least 40 wt.% relative to the total weight of the fuel source. The plastic film component B preferably represents at least 30 wt.%, more preferably at least 50 wt.%, even more preferably at least 70 wt.%, yet even more preferably at least 80 wt.% and most preferably at 90 wt.% relative to the total weight of the polymer component A. As the present invention is directed at overcoming grinding problems associated with the plastic film component, the relative benefits of the invention are increased with an increasing proportion of component B in the plastic component A.

Plastic component A comprises thermoplastic and thermosetting polymers. Examples of thermoplastic polymers that are generally present in the waste streams to be treated include (substituted) polyolefins; polystyrene; polyesters, such as polyethylenterephthalate (PET); polyamides, and copolymers and blends thereof. The thermoplastic material may also comprise halogenated polymers such as poly(vinyl chloride) (PVC) although this is not preferred. In particular, the thermoplastic material in the component B is mainly based on polyethylene homo- and/or copolymers. Typically, at least 60 wt.%, preferably at least 70 wt.%, more preferably at least 75 wt.%, and most preferably at least 80 wt.% of the thermoplastic material are polyethylene homo- and/or copolymers.

The cellulose component C is at least 20 wt.%, preferably greater than 25 wt.%, more preferably greater than 30 wt.% and even more preferably greater than 40 wt.% relative to the total weight of the waste stream. Typically, the cellulose material in component C is mainly based on paper and/or cardboard.

The greater the cellulose component C relative to the plastic component A, the greater the heat penetration into the core of the pellet which enables enhanced heat transfer throughout the whole pellet, thereby increasing the conversion of component B to component D. Thus, a synergistic effect is observed between the cellulose component C and the plastic film component B.

An upper cellulose component C level is preferably no more than 80 wt.%, more preferably no more than 70 wt.% and even more preferably no more than 60 wt.% relative to the total weight of the waste stream. At these upper levels the conversion of component B to component D is not further enhanced and the energy per weight level of the fuel source is reduced due to its high cellulose content.

Heat transfer throughout a pellet comprising a high plastic component tends to penetrate as a uniform heat wave. In doing so the outer layers melt, thereby encapsulating the inner core portion of the pellet in an insulation layer, thereby resulting in a pellet with a high portion of plastic film (component B) in the core portion, and thus poorer grindability.

While not wanting to be held by theory, it is thought that the inherent heat transfer properties of the cellulose component enables heat to penetrate throughout the pellet, thereby enabling a more uniform partial melting of the plastic film component. Thus, plastic film component B can be effectively reduced, without the use of an excessive energy input, such as required for melt extruded pellets.

The cellulose component C provides a further mechanism for the plastic film component B to increase its stiffness by fusing onto the more rigid material. The composite material (component D) derived from components B and C has improved grindability over component B or C separately. Component B has improved grindability due to the increased rigidity provided by the cellulose backing and component C's grindability is improved as the generation of a fibrous fluff material is reduced due to the binding effect of component B.

The level of component B is determined through extracting the plastic film components from the pellet. This is performed through a combination of:
- manually breaking up the pellet between the thumb and fingers, where the length of the pellets permits;
- using tweeters to extract plastic film from the agglomerated material, and
- using a scalpel to expose plastic film which has been encompassed by partially or fully molten plastic components D & E.

The extraction procedure disentangles mechanically bound components while avoiding the breaking of chemical or thermal bonds between component parts (eg. plastic film and paper), thereby preventing the conversion of component D to component B.. In this way, also components C, D and E can be determined.

Thus, the analysis method to determine the components involves, taking a number of pellets, for example 6 pellets, and
- manually breaking up the pellet between the thumb and fingers, where the length of the pellets permits;
- using tweeters to extract plastic film from the agglomerated material, and
- using a scalpel to expose plastic film which has been encompassed by partially of fully molten plastic components D & E.
- and measuring the weight of the several components

Component D, by definition, includes plastic film component B which has been partially melted or chemically adhered to other material (eg. cellulose), thereby increasing its grindability. Component D may also comprise plastic material with an A/L ratio of at least 0.2 which was present in the waste stream prior to the pelletizing step. Typically, the rigid plastic material in the waste stream includes thermosetting and thermoplastic material which have been moulded into rigid packaging and then ground to a suitable size for input into the pelletizing device.

In embodiments in which component D contains partially melted plastic film derived from component B, component D may include a segment which includes partially or fully melted plastic film and a segment which retains its original plastic film form. This structure is consistent with only part of the plastic film component B being exposed to sufficient heat for sufficient time to locally raise the temperature above the softening temperature of the plastic film component. Preferably, the segment which has not been heat treated, such that its stiffness and grindability has improved, is less than 50wt.%, more preferably, less than 30 wt.% and most preferably less than 20 wt.% of the total plastic film component of D which is derived from component B. The lower the amount of flexible plastic film within component D the better its grindability.

The grindability of plastic film segment within component D is typically better than plastic film component B alone, probably due to the combination of a generally higher A/L ratio of the plastic film segment and its close proximity to the more rigid segment comprising the partially or fully melted plastic film.

While, complete melt solidification of component B may also improve grindability of the fuel source, this solution requires a higher energy input and hence the net energy delivered from the waste stream (energy output minus energy expended during the formation and processing of the pellets) is necessarily lower than compared to the present invention. Accordingly, component B is preferably converted to component D by a chemical binding agent or partially melting component B such that the resultant component D particles are not integrally connected as a solidified polymer. Material of this nature is defined as a fully melted component E.

The fully melted component E is defined as a component in which essentially all of the plastic component B has entered into the liquid state and recrystallised such to produce an integral lump, which cannot be separated into its original components without severing a thermal or chemical bond, e.g. plastic thermally fused with paper.

In pellets which are fully melted, Component E is generally 100 wt.% of the total weight of the pellet. However, in pellets with a high cellulose component, a discrete proportion of component C (cellulose) may exist separate from component E.

Preferably, the proportion of the fully melted component E and the plastic film component B is minimized, thereby increasing the total proportion of component D derived from partially melted plastic film. Preferably, the wt.% of component E is no more than 90 wt.%, more preferably no more than 60 wt.%, even more preferably no more than 35 wt.% and most preferably no more than 20 wt.% relative to the total weight of the pellet. A low wt.% of component E is reflective of a process in which component B is efficiently converted to component D, without excessive energy being inefficiently used in the conversion of component B to component E.

Preferably at least 20 wt.%, 30wt.%, 40 wt.%, 50 wt.%, 60 wt.% or 70 wt. %of component B is converted to component D. The higher the conversion of component B to component D, the better the grinding characteristics of the pellet. Preferably, no more than 98 wt.%, more preferably no more than 95 wt.% and even more preferably no more than 90 wt.% of component B is converted to component D. Too high a conversion of component B to component D may result in the excessive formation of component E, thereby resulting in high energy requirements to produce the pellet.

The waste stream is generally defined in terms components A, B and C, with the difference between components A and B, designated as component D. The components of the pellets are generally defined in terms of the proportion of remaining component B and the component in which component B has been transferred into (i.e. components D and E). Components D and E may comprise component C in addition to a portion derived from component B.

The solution as defined in the present invention enables a waste stream to be efficiently and effectively converted into a pellet which can be ground into a fuel/reduction source with good combustibility/reduction and flow properties.

Advantageously, the conversion of the plastic film component B to component D is monitored and controlled. This ensures that energy consumption in converting component B to component D is minimized, while maximizing the grindability of the pellet.

### PROCESSING

In the method according to the invention the cellulose/plastic mixture of the feed stream is preferably produced from a waste stream through reduction of its particle size in a reducing device containing a screen mat or rotating drum screen and a size reduction device, which screen mat or drum screen, as a result of a frequently varying tensile load working on it, shakes the waste stream loose, during and/or after which it is separated on the basis of size into a fraction of small particles and a fraction of large particles, after which the large particles fraction is size reduced to a product having the desired particle size in the size reduction device and after which the size reduced product and the small particles fraction are combined. The intensive shaking on the screen mat causes small agglomerated particles to break up, as a result of which a relatively large fraction can already comply with the desired maximum dimensions. This involves a major capacity advantage.

Preferably, at least 20 to 30 wt.% of the waste stream are already smaller than the mesh size of the screen mat. Another advantage of this method is that heavy parts such as metal parts can be well separated from light particles, such as the particles of cellulosic and thermoplastic materials, as a result of which they can more easily, more completely and more selectively be removed from the waste stream before the large particles fraction is supplied to the grinding device. Preferably, the metal parts are removed by a magnet, preferably a belt magnet and/or Eddy current device, during and/or after the shaking on the screen mat. The capacity will depend on the desired degree of reduction and hence on the difference in particle size between the waste stream and the feed stream. A 'size reduction device' for this process step is in particular understood to be a shredder, although the method is in principle not limited thereto.

The size of the sieve meshes, and hence of the particles after the grinding, is chosen in relation to the hole diameter of the mould. With a view to obtaining a well pelletizable feed stream the size of the particles made of cellulosic and thermoplastic materials in the stream fed to the pelletizing device is preferably predominantly at most 6 times, more preferably at most 5 times and most preferably at most 4 times the hole diameter of the mould in the subsequent pelletizing step. 'Predominantly' is here understood to imply at least about 75 wt.%. If the particles are too large, the residence time of the material in the pelletizing device becomes too long, as a result of which the temperature may become too high and undesirable complete melting of the plastic particles may occur. It has been found that particularly good pelletizing results can be obtained for pelletized fuel with diameters of between 5 and 8 mm if the particles in the feed stream are predominantly smaller than 30 mm.

As the waste stream usually has a high moisture content, the recycling process of the waste stream usually comprises one or more drying steps. The moisture content plays an important part in pelletizing the feed stream. Moisture contents are expressed in percentages of the total weight, whereas the plastic or cellulose contents are expressed in percentages of the dry weight of the thermoplastic and cellulosic material. The particulate cellulose/plastic mixture used as feed stream in the method according to the invention has a moisture content of 1 to 15 wt.% (relative to the total weight of the mixture). Preferably, the moisture content is 1 to 10 wt.%, more preferably 2 to 7 wt.%. The advantage of a certain minimum amount of water is that the feed stream can be more easily deformed, and hence more easily pelletized.

It is also thought that a minimum proportion of water generates a small amount of steam which provides an efficient heat transfer medium to facilitate the partial melting of the plastic film throughout the pellet. The uniformly dispersed cellulose component C provides both a source of steam and a distribution pathway for the steam to transfer heat to the plastic film components within the pellet. Higher amounts of moisture consume a higher proportion of the heat by evaporation, which heat is also required for softening the thermoplastic material to convert the plastic film component B to component D.

Moisture contents of less than 2 wt.% require too long drying times, and hence excessive energy input, in the preceding drying step(s) and offer no significant advantage for the pelletizing process over moisture contents of from 2 to 7 wt.%. The moisture content of the feed stream is also a control parameter for the temperature of the feed stream and the temperature of the pellets leaving the mould. This content is therefore chosen to be such that the temperature of the pellets leaving the mould holes is not higher than 125°C, such that complete melting of the plastic film component is avoided.

In the method according to the invention the pellets leaving the mould are cooled and dried in a gas stream. The moisture content of the feed stream may on the other hand not be chosen to be so high that the residual moisture content after the production of the fuel pellet is too high because the moisture substantially reduces the calorific value of the fuel pellets on account of the high heat of evaporation. For these reasons the moisture content of the ultimate fuel pellet is preferably less than 5, more preferably even less than 3 wt.%.

In one embodiment, the pelletizing device which is used in the present method comprises a mould with holes whose effective hole length (L) and hole diameter (D) ratio (R) is at least 7. The 'hole diameter' is in each case understood to be the smallest diameter of the hole which determines the diameter of the pellet. 'Effective hole length (L)' is understood to be the length of the part of the hole in which the feed stream is effectively compressed.

Where here and hereinafter reference is made to properties of the pellets or of particles in a collection of particles, this is intended to imply the average value of a sufficiently large number of pellets or particles. "Feed stream" is here and hereinafter each time understood to be the stream of the particulate cellulose/plastic mixture that is fed to the pelletizing device.

In the method according to the invention the feed stream has a temperature (T₁) of at most 90°C, preferably at most 75°C. At this temperature the feed stream has sufficiently good transport properties without involving problems of agglomeration, smearing and filament formation before or in the pelletizing device. 'Smearing' is understood to mean that the high temperature causes the plastic to soften, melt or at least become fluid to such an extent that it is smeared over and adheres to all parts with which it comes into contact. In the context of these objectives the temperature is more preferably at most 60°C and most preferably at most 50°C, depending on the moisture content of the feed stream. At lower moisture contents of the feed stream the temperature may even be lower.

In view of the stability of the pelletizing process and the quality of the pellets obtained, the values of R and T₁ are chosen in relation to one another so that the temperature (T₂) of the pellets leaving the mould is between 100 and 125°C. The higher the plastic content, the greater the tendency to agglomerate will be. The rise in temperature (T₂ - T₁) that occurs in the pelletizing device is, with a view to obtaining a good hardness, at least 10, more preferably at least 20, even more preferably at least 30 and most preferably at least 40°C.

A greater rise in temperature can for example be chosen by setting a higher R. This will result in the generation of greater frictional heat and hence greater penetration of heat into the inner core of the pellet. For this reason R is preferably at least 8, more preferably at least 10, even more preferably at least 12 and most preferably at least 15. The value of R that is chosen cannot be any high value as that would adversely affect the productivity. The value of R is therefore generally less than 20. Higher rises in temperature can also be realized by choosing a heated or heat-insulated mould. In these embodiments, the R value may be reduced according (e.g R > 4 or 5), as the process is less dependent upon frictional heat generated through the compression of waste material through the die hole.

Advantageously, the cellulose component C generates a relatively higher proportion of frictional heat against the die hole walls. There increasing levels of component C in the waste stream leads to both increased heat generation and increase heat transfer from the out layers of the pellet to the inner core of the pellet.

In embodiments relying on frictional heat to convert component B to component D, the diameter of the holes in the annular mould is at most 14 mm. The advantage of this is that there is a shorter distance for the heat to be transferred from the die walls to the core of the pellet. In view of the desired conversion of component B to component D the diameter is preferably at most 12, more preferably at most 10, even more preferably at most 8 mm, even more preferably at most 6 mm and most preferably at most 4 mm. In view of their production costs, the diameter of the cellulose/plastic pellets is preferably more than 2 mm, more preferably more than 3 mm.

The length of the pellet is generally chosen to be between 0.5 and 10, preferably between 1 and 5, more preferably 1 to 3 times and even more preferably 1 to 2 times the diameter. In view of the pneumatic transport properties, the length is most preferably approximately the same as the diameter. The (average) length can for example be chosen by cutting or breaking the pellets leaving the mould with the aid of one or more knives or breaking bars moving relative to the mould surface.

An exemplary pelletizing device that can be used in the present invention is described in US-A-5,342,418.

In one embodiment of the present invention, the waste stream is fed into a pelletizing device, thereby forming a pellet having an outer portion and a core portion, wherein the pelletizing device transfers heat into the core portion such that the plastic film component B is partially fused onto the cellulose component C, thereby producing component D in the core portion. Alternatively, component B in the core portion of the pellet is converted to component D by raising the temperature of the plastic film above its softening point, such that the plastic film shrinks and deforms to a particle with an A/L ratio of at least 0.2. As plastic film is typically orientated or stretched during manufacture, the application, upon increasing the temperature of the plastic film to above its softening temperature, the polymer have sufficient energy to relax and deform into a more non-orientated and energy efficient state.

The softening temperature of polyethylene based material typically ranges from 80°C to 120°C.

The pelletizing device preferably forms the pellets through forcing the waste material stream through die holes, such that frictional heat from the die hole is transferred into the outer surface layers of the pellets. It has been found that the cellulose content of the pellets facilitates heat transfer from the die surface through the outer layers and into the pellet's core portion, thereby enhancing the conversion of the plastic film component B into the more rigid and more grindable component D.

Preferably, the frictional heat between the die wall and the outer layers of the pellets is such that the outer layers of the pellet have a temperature exiting the pelletizing device of between 100°C and 125°C, preferably 110 °C and 122°C, more preferably 115°C and 120°C.

At these temperatures, the outer layers of plastic film are at least partially melted, with the cellulose component enabling the generated frictional heat to penetrate into the core of the pellet, thereby shrinking or partially melting the plastic film component with the core portion of the pellet.

The temperature of the outer core leaving the pelletizing device is indicative of the maximum temperature the plastic film is exposed to. The maximum temperature of the core will depend upon the thermal properties of the material between the outer layers and the inner core of the pellet. A cellulose component of at least 20 wt.% relative to the total weight of the pellet is required to promote efficient heat transfer to the core portion of the core and thus convert component B to component D through the pellet.

In some embodiments, in which component B comprises a sufficient portion of plastic film with a low softening temperature (i.e less than 100°C), the temperature of the pellet leaving the mould may be in the range of 80 to 100°C or 90 to 100°C.

The person skilled in the art would be able to duplicate this technical effect through various analogous means. For example, an external heating source may be applied to the pelletizing device to provide heat through the die walls into the pellet. Alternatively, hot air (greater than 90°C, preferably greater than 100°C and more preferably greater than 110°C) may be applied to the pellet during its formation. In this embodiment, the presence of the porous cellulose component enables the hot air to penetrate through the entire pellet, enabling conversion of component B to component D.

It will be appreciated that the optimum temperatures and times for the pellet to be subjected to heat will be dependent upon the composition and moisture content of the waste streams and the geometry of the pellet. Changes in the proportion and nature of the plastic film components and cellulose component (eg. thickness, porosity, chemistry) may require corresponding changes in pelletizing conditions to ensure pellets are produced within the scope of the invention.

To maximize the net energy output of the pellets, through optimizing energy consumption in pellet formation, the process of producing the pellet preferably comprises a process control step. The process control step monitors the proportion of component B in the film and, depending upon the analysis, process changes are initiated to reduce the deviation of the proportion of component B from a target set point, which is within the scope of the present invention. Preferably, the set point is a component B in the final pellet within the range of 1 wt% and 15 wt%, preferably 2 wt. % and 10 wt.% and more preferably 2.5 wt.% and 5 wt.% .

It is thought that the modulus of elasticity Eₘ is also increased during the heat treatment operation. As plastic film is generally produced to have a high amorphous content, via the use of a chill roller or the like, the heating of the plastic film to within 30°C of its softening temperature Tₛ increases the mobility of the amorphous phase such that an annealing type step increases the film's crystallinity and thus increases its Eₘ value. Therefore, in a preferred embodiment of the present invention, the pellet undergoes an annealing step.

The annealing step is defined as a unit operation in which the temperature of the heat treated film is maintained above its Tₛ for preferably at least 5 minutes, 10 minutes or 15 minutes. The addition of an annealing step is somewhat anti-intuitive as conventional wisdom directs towards rapid cooling to decrease the temperature (and increase rigidity) of the fuel source and thereby improve grindability.

When molten plastic exists on the outer surface of the pellet, an air stream is preferably used to cool the outer surface sufficiently to avoid smearing. As the cooling stream is only effective in cooling the outer surface of the pellet, is does not inhibit the annealing of the predominate proportion of the plastic film component B.

In another embodiment of the present invention, there is provided a pellet comprising, relative to the total weight of the pellet:
a polymer component A comprising more than 0 wt.% and less than 15 wt.% of a plastic film component B;
at least 20 wt. % of a cellulose component C; and
at least 5 wt. % of a plastic component D,
wherein the plastic film component B has a cross sectional area (A) to length (L) ratio of less than 0.2 and the plastic component D has an A/L ratio of at least 0.2.

Preferably, the plastic film component B content is at least 1 wt%, more preferably at least 2 wt% and even more preferably at least 3 wt.%, relative to the total weight of the pellet. The higher the amount of component B, the less energy consumption required to produce the pellets. Preferably, the plastic film component B is less than 12 wt%, more preferably less than 10 wt.% and even more preferably less than 8 wt.% relative to the total weight of the pellet. The lower the amount of component B, the better the grindability of the pellets. Excessive energy consumption may be avoided by ensuring that the plastic film component B is not completely melted during processing. (e.g. the pellet contains a plastic film component B having a cross sectional area (A) to length (L) ratio of less than 0.2).

Preferably, the plastic component D content is at least 10 wt.%, more preferably at least 15 wt.%, even more preferably at least 20 wt.%, even more preferably at least 30 wt.% and most preferably at least 40 wt.% relative to the total weight of the pellet. The higher the component D content the better the grinding characteristics of the pellet in comparison to a pellet containing the equivalent proportion of plastic film component B.

Preferably component D comprises, relative to the total weight of component D, at least 30 wt.%, preferably at least 50 wt.% and most preferably at least 70 wt.% of partially melted plastic film. The proportion of partially melted plastic film will be dependent upon the amount of rigid plastic and cellulose also present in component D.

Preferably, the pellet contains no more than 90 wt.% of component E which comprises fully melted plastic as previously described.

Where appropriate, the pellet may be further defined by the limitations previously described in other embodiments of the present invention.

### EXAMPLE

### Composition of waste stream

| | |
|---|---|
| Component A: | 50 wt.% |
| Component B: | 40 wt.% |
| Component C | 50 wt.% |
| Component D | 10 wt.% |

### Pelletizing step

The waste stream that had been processed to remove impurities such as glass, stones and metallic objects, consisted of cellulose and plastic particles predominantly below 30mm diameter. The waste stream was fed into an annular mould pelletizing device (Paladin^{™} 2000BM ex-Andritz, Inc.) having a R value of 15 (except of sample B, in which R = 12),with a die hole diameter of 8 mm, except for sample 1, in which the die hole diameter was 6 mm. The pelletizer was allowed to reach steady state, whereby the temperature of the pellets exiting the pelletizer had become uniform.

Pellets used in Example 1 and 2 were produced, such that the temperature of the outside of the pellet exiting the mould was between 110 to 120°C. The pellets corresponding to comparative experiment A had a pellet temperature exiting the pelletizer of between 100 and 110°C. The pellets corresponding to comparative experiment B had a pellet temperature exiting the pelletizer between 125 to 130°C.

### Analysis of the pellets

Six pellets from each sample were manually separated and classified in the previously defined component groups. The separation of the pellets into component parts was performed using hand, tweeter and/or scalpel. The separation process involved the mechanical disentanglement and release of mechanically fused particles, while avoiding the break down of chemical or thermal bonds that had formed between the original components of the waste stream.

Comparative sample A was relatively easy to separate into its component parts using the dexterity of the hand and fingers and, where needed, the use of tweeters to separate out plastic film components embedded into other particles by pressure or entanglement.

Comparative sample B could not be separated by hand. The scalpel was used to cut into the outer layers of the pellet. However, as cutting proceeded it was revealed that the pellet was an integral mass of in which the all of the plastic film component had melted to bind together the cellulose component C and thicker thermoplastic and/or thermosetting plastic particles which had not entered the liquid state during the palletizing step. No plastic film particles were visible in full or in part. Given the complete melting of the plastic film component of the pellet, the pellet was classified as being 100 wt.% component E. Therefore, also an A/L ratio could not be determined.

The pellets from Example 1 were also difficult to separate by hand but upon separation, small agglomerates and separate particles having a lateral dimension of generally less than 2mm separated from larger integral lumps derived from completed melted plastic film component B. It was difficult to determine the individual components of the small particles, although the mixture included cellulose and partially melted plastic film particles. This portion of the sample was classified as component D. Visual evidence of a small proportion (<1 wt.%) of partially melted plastic film was evident from the surface of the integral lumps of component E. The observation of a plastic film portion was denoted by indicating in Table 1 that the proportion of plastic film component B was "observed".

The pellets from Example 2 contained considerably more plastic film than Example 1 pellets, with the use of tweezers required to assist in the separation of the plastic film from entangled agglomerates of components D and/or E.

Typically no longer than 15 minutes (with a maximum of 20 minutes) was spent separating the component parts of each pellet.

### Grinding

Pellets were fed into an Ultrarotor^{™} III grinder (power rating 75 KW) with a capacity of 700-1000 kg/hr of pellets, thereby generating a fine particulate powder.

The resultant particle size distribution confirmed that pellets formed within the scope of the present invention have good grindability which is comparable to fully molten pellets, as indicated in Table 3. The % volume greater than 2 mm was determined by use of screening sieves as known in the art using suitable means such as air and/or vibration to prevent agglomeration of the particles.

**Table 1**

| Composition of pellet in wt.%, relative to the weight of the total pellet | | | |
|---|---|---|---|
| | Component B | Components D | Component E |
| 1 | observed | 13.4 | 86.6 |
| 2 | 5.4 | 63.5 | 31.1 |
| A | 15.5 | 71.1 | 13.4 |
| B | 0 | 0 | 100 |

**Table 2**

| A/L ratio of pellet components | | |
|---|---|---|
| | Component B | Component D |
| 1 | - | 0.4 - 0.9 |
| 2 | 0.09 | 0.4 -1.3 |
| A | 0.07 | 0.3 - 1.2 |

**Table 3**

| Particle size distribution of ground samples from examples 1 and 2 and comparative experiment B | |
|---|---|
| | vol.% greater than 2 mm |
| 1 | 3% |
| 2 | 4% |
| A | 18% |
| B | 1% |

## Claims

1. A method for producing a pellet suitable for grinding into a fine powder comprising the steps of:
(a) forming a waste feed stream comprising:
(i) a polymer component A comprising, relative to the total weight of the waste stream, at least 25 wt.% of a plastic film component B having a cross sectional area (A) to length (L) ratio of less than 0.2 and whereby said A/L ratio is determined by measuring the longest longitudinal dimension of the plastic film (L), the longest latitudinal dimension (W) and the thickness (D), with the cross sectional area A of a particle of component B defined as W x D, and whereby A is given in mm² and L is given in mm, and
(ii) a cellulose component C of at least 20 wt.%, relative to the total weight of the waste stream,
(b) pelletizing the waste stream with a pelletizing device such that at least part of the plastic film component B is converted to component D, having a A/L ratio of at least 0.2, by chemical and/or heat treatment,
wherein the pellet has less than 15 wt.% component B relative to the total weight of the pellet and in which component D, if heat treated, is derived from plastic film component B which has been no more than partially melted.

2. The method according to clam 1, wherein at least part of the plastic film component B is converted to component D by heating the plastic film component B and cellulose component C in the pelletizing step (b) for sufficient time and sufficient temperature such that component D comprises a composite structure derived from component B and component C.

3. The method according to claim 1, wherein component B is converted to component D through frictional heating from the pelletizing device, such that the temperature of the outside of the pellet exiting the pelletizing device is between 100°C and 125°C.

4. The method according to claim 1, wherein compound D is derived from the plastic film component B which is chemically bound to the cellulose component C by a chemical binding agent.

5. The method according to anyone of the preceding claims, further comprising an annealing step.

6. The method according to anyone of the preceding claims, wherein the pelletizing of the feed stream forms a pellet having a outer portion and a core portion, wherein the pelletizing device transfers heat into the core portion such that the plastic film component B is partially fused onto the cellulose component C, thereby producing component D in the core portion.

7. The method according to anyone of the preceding claims, wherein the pelletizing of the feed stream forms a pellet having a outer portion and a core portion, wherein the pelletizing device transfers heat into the core portion such that the plastic film component B shrinks or partially melts thereby converting component B to component D in the core portion of the pellet.

8. The method according to anyone of the preceding claims, wherein the waste material stream is supplied to the pelletizing device at a temperature T₁ of at most 90°C.

9. The method according to claim 8, wherein the pelletizing device comprising a mould with holes having a diameter D of at most 14 mm and an effective hole length L to hole diameter D ratio R of at least 7, the values of R and T₁ being chosen in relation to one another so that the temperature T₂ of the pellets leaving the mould is between 100 and 125°C and the T₂ - T₁ rise in temperature is at least 10°C.

10. The method according to any one of the preceding claims, further comprising the step of testing the pellets to assess the wt.% of component B, and, if component B is above 15 wt.%, adjusting process conditions such that future pellets have a component B content of less than 15 wt.%.

11. A pellet obtainable by the method according to anyone of the preceding claims.

12. A method of preparing a finely ground particles comprising the step of grinding a pellet produced by a method comprising the steps of:
(a) forming a feed material stream comprising:
(i) a polymer component A comprising, relative to the total weight of the waste stream, at least 25 wt.% of a plastic film component B having a cross sectional area (A) to length (L) ratio of less than 0.2, and whereby said A/L ratio is determined by measuring the longest longitudinal dimension of the plastic film (L), the longest latitudinal dimension (W) and the thickness (D), with the cross sectional area A of a particle of component B defined as W x D, and whereby A is given in mm² and L is given in mm, and
(ii) a cellulose component C of at least 20 wt.%, relative to the total weight of the waste stream,
(b) pelletizing the waste stream with a pelletizing device such that at least part of the plastic film component B is converted to component D, having a A/L ratio of at least 0.2, by chemical and/or heat treatment,
wherein, the pellet has less than 15 wt.% component B relative to the total weight of the pellet and in which component D, if heat treated, is derived from plastic film component B which has been no more than partially melted.

13. The method according to claim 12, wherein the pellet is ground using an air mill.

14. The method of according to claim 12 or 13, whereby the ground pellet comprises a particle size distribution with less than 10 wt. % greater than 2 mm.

15. Use of the ground pellet produced according to anyone of claims 12 to 14 as a fuel source.

16. A pellet according to claim 11, comprising, relative to the total weight of the pellet: a polymer component A comprising more than 0 wt.% and less than 15 wt.% of a plastic film component B;
at least 20 wt. % of a cellulose component C; and
at least 5 wt. % of a plastic component D,
wherein the plastic film component B has a cross sectional area (A) to length (L) ratio of less than 0.2 and the plastic component D has an A/L ratio of at least 0.2.

## Patentansprüche

1. Verfahren zur Herstellung eines Pellets, das zum Mahlen zu einen feinen Pulver geeignet ist, umfassend die folgenden Schritte:
(a) Bilden eines Abfallzuführstroms, umfassend:
(i) eine Polymerkomponente A, umfassend, bezogen auf das Gesamtgewicht des Abfallstroms, mindestens 25 Gew.-% einer Kunststofffolienkomponente B mit einem Verhältnis von Querschnittsfläche (A) zu Länge (L) von weniger als 0,2, und wobei das A/L-Verhältnis durch Messen der längsten Längsabmessung der Kunststofffolie (L), der längsten Breitenabmessung (W) und der Dicke (D) gemessen wird, wobei die Querschnittsfläche A eines Teilchen der Komponente B als W x D definiert ist und wobei A in mm² angegeben wird und L in mm angegeben wird, und
(ii) eine Cellulosekomponente C von mindestens 20 Gew.-%, bezogen auf das Gesamtgewicht des Abfallstroms,
(b) Pelletisieren des Abfallstroms mit einer Pelletiervorrichtung, so dass zumindest ein Teil der Kunststofffolienkomponente B zu Komponente D umgewandelt wird, der ein A/L-Verhältnis von mindestens 0,2 aufweist, durch chemische und/oder Wärmebehandlung,
wobei das Pellet weniger als 15 Gew.-% von Komponente B, bezogen auf das Gesamtgewicht des Pellets, aufweist und wobei die Komponente D, im Falle einer Wärmebehandlung, von der Kunststofffolienkomponente B abgeleitet wird, die nur teilweise geschmolzen wurde.

2. Verfahren gemäß Anspruch 1, wobei zumindest ein Teil der Kunststofffolienkomponente B zu Komponente D durch Erwärmen der Kunststofffolienkomponente B und Cellulosekomponente C in dem Pelletierschritt (b) für eine ausreichende Zeit und bei einer ausreichenden Temperatur umgewandelt wird, so dass die Komponente D eine Verbundstruktur umfasst, die sich aus der Komponente B und der Komponente C ergibt.

3. Verfahren gemäß Anspruch 1, wobei die Komponente B zu Komponente D durch Reibungswärme von der Pelletiervorrichtung umgewandelt wird, so dass die Temperatur der Außenseite des Pellets, das die Pelletiervorrichtung verlässt, zwischen 100°C und 125°C beträgt.

4. Verfahren gemäß Anspruch 1, wobei die Verbindung D von der Kunststofffolienkomponente B abgeleitet ist, die chemisch an die Cellulosekomponente C durch ein chemisches Bindemittel gebunden ist.

5. Verfahren gemäß einem der vorausgehenden Ansprüche, weiter umfassend einen Temper- bzw. Glühschritt.

6. Verfahren gemäß einem der vorausgehenden Ansprüche, wobei das Pelletisieren des Zuführstroms ein Pellet mit einem äußeren Teil und einem Kernteil bildet, wobei die Pelletiervorrichtung Wärme in den Kernteil überträgt, so dass die Kunststofffolienkomponente B teilweise auf die Cellulosekomponente C geschmolzen wird, wodurch die Komponente D im Kernteil erzeugt wird.

7. Verfahren gemäß einem der vorausgehenden Ansprüche, wobei das Pelletisieren des Zuführstroms ein Pellet mit einem äußeren Teil und einem Kernteil bildet, wobei die Pelletiervorrichtung Wärme in den Kernteil überträgt, so dass die Kunststofffolienkomponente B schrumpft oder teilweise schmilzt, wodurch die Komponente B zu Komponente D im Kernteil des Pellets umgewandelt wird.

8. Verfahren gemäß einem der vorausgehenden Ansprüche, wobei der Abfallmaterialstrom der Pelletiervorrichtung bei einer Temperatur T₁ von höchstens 90°C zugeführt wird.

9. Verfahren gemäß Anspruch 8, wobei die Pelletiervorrichtung eine Form mit Löchern mit einem Durchmesser D von höchstens 14 mm und einem Verhältnis von effektiver Lochlänge L zu Lochdurchmesser D R von mindestens 7 umfasst, wobei die Werte von R und T₁ im Verhältnis zueinander so gewählt werden, dass die Temperatur T₂ der Pellets, die die Form verlassen, zwischen 100 und 125°C beträgt und der T₂ - T₁-Anstieg der Temperatur mindestens 10°C beträgt.

10. Verfahren gemäß einem der vorausgehenden Ansprüche, weiterhin umfassend den Schritt des Testens der Pellets, um die Gew.-% der Komponente B zu bewerten und, sofern die Komponente B über 15 Gew.-% ausmacht, den Schritt des Einstellens der Prozessbedingungen, so dass zukünftige Pellets einen Komponenten-B-Gehalt von weniger als 15 Gew.-% aufweisen.

11. Pellet, erhältlich durch das Verfahren gemäß einem der vorausgehenden Ansprüche.

12. Verfahren zur Herstellung von fein gemahlenen Teilchen, umfassend den Schritt des Mahlens eines Pellets, hergestellt durch ein Verfahren, das die folgenden Schritte umfasst:
(a) Bilden eines Zuführmaterialstroms, umfassend:
(i) eine Polymerkomponente A, umfassend, bezogen auf das Gesamtgewicht des Abfallstroms, mindestens 25 Gew.-% einer Kunststofffolienkomponente B mit einem Verhältnis von Querschnittsfläche (A) zu Länge (L) von weniger als 0,2, und wobei das A/L-Verhältnis durch Messen der längsten Längsabmessung der Kunststofffolie (L), der längsten Breitenabmessung (W) und der Dicke (D) gemessen wird, wobei die Querschnittsfläche A eines Teilchen der Komponente B als W x D definiert ist und wobei A in mm² angegeben wird und L in mm angegeben wird, und
(ii) eine Cellulosekomponente C von mindestens 20 Gew.-%, bezogen auf das Gesamtgewicht des Abfallstroms,
(b) Pelletisieren des Abfallstroms mit einer Pelletiervorrichtung, so dass zumindest ein Teil der Kunststofffolienkomponente B zu Komponente D umgewandelt wird, der ein A/L-Verhältnis von mindestens 0,2 aufweist, durch chemische und/oder Wärmebehandlung,
wobei das Pellet weniger als 15 Gew.-% von Komponente B, bezogen auf das Gesamtgewicht des Pellets, aufweist und wobei die Komponente D, im Falle einer Wärmebehandlung, von der Kunststofffolienkomponente B abgeleitet wird, die nur teilweise geschmolzen wurde.

13. Verfahren gemäß Anspruch 12, wobei das Pellet unter Verwendung einer Luftmühle gemahlen wird.

14. Verfahren gemäß Anspruch 12 oder 13, wobei das gemahlene Pellet eine Teilchengrößenverteilung mit weniger als 10 Gew.-% von größer als 2 mm umfasst.

15. Verwendung des gemahlenen Pellets, das gemäß einem der Ansprüche 12 bis 14 hergestellt wird, als eine Brennstoffquelle.

16. Pellet gemäß Anspruch 11, umfassend, bezogen auf das Gesamtgewicht des Pellets:
eine Polymerkomponente A, umfassend mehr als 0 Gew.-% und weniger als 15 Gew.-% einer Kunststofffolienkomponente B;
mindestens 20 Gew.-% einer Cellulosekomponente C; und
mindestens 5 Gew.-% einer Kunststoffkomponente D,
wobei die Kunststofffolienkomponente B ein Verhältnis von Querschnittsfläche (A) zu Länge (L) von weniger als 0,2 aufweist und die Kunststoffkomponente D ein A/L-Verhältnis von mindestens 0,2 aufweist.

## Revendications

1. Procédé pour la production d'une pastille appropriée pour le broyage en une poudre fine comprenant les étapes consistant à :
(a) former un courant d'alimentation de déchets comprenant :
(i) un composant polymère A comprenant, par rapport au poids total du courant de déchets, au moins 25 % en poids d'un composant film plastique B ayant un rapport de la superficie de la section transversale (A) à la longueur (L) inférieur à 0,2, ledit rapport A/L étant déterminé par la mesure de la dimension longitudinale la plus longue du film plastique (L), de la dimension transversale la plus longue (W) et de l'épaisseur (D), la superficie de la section transversale A d'une particule de composant B étant définie comme étant W x D et A étant donnée en mm² et L étant donnée en mm, et
(ii) un composant cellulosique C représentant au moins 20 % en poids, par rapport au poids total du courant de déchets,
(b) pastiller le courant de déchets avec un dispositif de pastillage de façon à ce qu'au moins une partie du composant film plastique B soit convertie en composant D, ayant un rapport A/L d'au moins 0,2, par traitement chimique et/ou thermique,
dans lequel la pastille comprend moins de 15 % en poids de composant B par rapport au poids total de la pastille et dans lequel le composant D, s'il est traité thermiquement, est issu du composant film plastique B qui n'a pas été plus que partiellement fondu.

2. Procédé selon la revendication 1, dans lequel au moins une partie du composant film plastique B est convertie en composant D par chauffage du composant film plastique B et du composant cellulosique C dans l'étape de pastillage (b) pendant un temps suffisant et à une température suffisante pour que le composant D comprenne une structure composite issue du composant B et du composant C.

3. Procédé selon la revendication 1, dans lequel le composant B est converti en composant D par chauffage par friction à partir du dispositif de pastillage, de façon à ce que la température de l'extérieur de la pastille sortant du dispositif de pastillage soit comprise entre 100 °C et 125 °C.

4. Procédé selon la revendication 1, dans lequel le composé D est issu du composant film plastique B qui est chimiquement lié au composant cellulosique C par un agent liant chimique.

5. Procédé selon l'une quelconque des revendications précédentes, comprenant en outre une étape de recuit.

6. Procédé selon l'une quelconque des revendications précédentes, dans lequel le pastillage du courant d'alimentation forme une pastille ayant une partie externe et une partie centrale, dans lequel le dispositif de pastillage transfère de la chaleur dans la partie centrale de façon à ce que le composant film plastique B soit partiellement fondu sur le composant cellulosique C, ce qui produit de cette manière le composant D dans la partie centrale.

7. Procédé selon l'une quelconque des revendications précédentes, dans lequel le pastillage du courant d'alimentation forme une pastille ayant une partie externe et une partie centrale, dans lequel le dispositif de pastillage transfère de la chaleur dans la partie centrale de façon à ce que le composant film plastique B rétrécisse ou fonde en partie ce qui convertit de cette manière le composant B en composant D dans la partie centrale de la pastille.

8. Procédé selon l'une quelconque des revendications précédentes, dans lequel le courant de déchets est introduit dans le dispositif de pastillage à une température T₁ d'au maximum 90 °C.

9. Procédé selon la revendication 8, dans lequel le dispositif de pastillage comprend un moule doté de trous ayant un diamètre D d'au maximum 14 mm et un rapport R de la longueur efficace des trous L au diamètre des trous D d'au moins 7, les valeurs de R et T₁ étant choisies l'une par rapport à l'autre pour que la température T₂ des pastilles quittant le moule soit comprise entre 100 et 125 °C et la montée de température T₂-T₁ soit d'au moins 10 °C.

10. Procédé selon l'une quelconque des revendications précédentes, comprenant en outre l'étape consistant à tester les pastilles pour évaluer le % en poids de composant B et, si le composant B représente plus de 15 % en poids, ajuster les conditions de procédé de façon à ce que les futures pastilles aient une teneur en composant B inférieure à 15 % en poids.

11. Pastille pouvant être obtenue par le procédé selon l'une quelconque des revendications précédentes.

12. Procédé de préparation de particules finement broyées comprenant l'étape consistant à broyer une pastille produite par un procédé comprenant les étapes consistant à :
(a) former un courant de matière d'alimentation comprenant :
(i) un composant polymère A comprenant, par rapport au poids total du courant de déchets, au moins 25 % en poids d'un composant film plastique B ayant un rapport de la superficie de la section transversale (A) à la longueur (L) inférieur à 0,2, ledit rapport A/L étant déterminé par la mesure de la dimension longitudinale la plus longue du film plastique (L), de la dimension transversale la plus longue (W) et de l'épaisseur (D), la superficie de la section transversale A d'une particule de composant B étant définie comme étant W x D et A étant donnée en mm² et L étant donnée en mm, et
(ii) un composant cellulosique C représentant au moins 20 % en poids, par rapport au poids total du courant de déchets,
(b) pastiller le courant de déchets avec un dispositif de pastillage de façon à ce qu'au moins une partie du composant film plastique B soit convertie en composant D, ayant un rapport A/L d'au moins 0,2, par traitement chimique et/ou thermique,
dans lequel la pastille comprend moins de 15 % en poids de composant B par rapport au poids total de la pastille et dans lequel le composant D, s'il est traité thermiquement, est issu du composant film plastique B qui n'a pas été plus que partiellement fondu.

13. Procédé selon la revendication 12, dans lequel la pastille est broyée à l'aide d'un broyeur à air.

14. Procédé selon la revendication 12 ou 13, dans lequel la pastille broyée présente une distribution de la taille des particules comprenant moins de 10 % en poids de particules de taille supérieure à 2 mm.

15. Utilisation de la pastille broyée produite selon l'une quelconque des revendications 12 à 14 comme source de combustible.

16. Pastille selon la revendication 11 comprenant, par rapport au poids total de la pastille :
un composant polymère A comprenant plus de 0 % en poids et moins de 15 % en poids d'un composant film plastique B ;
au moins 20 % en poids d'un composant cellulosique C ; et
au moins 5 % en poids d'un composant plastique D,
dans laquelle le composant film plastique B a un rapport de la superficie de la section transversale (A) à la longueur (L) inférieur à 0,2 et le composant plastique D a un rapport A/L d'au moins 0,2.
